# EUROPÄISCHE PATENTANMELDUNG

(11) **EP 3 547 501 A1**
(43) Veröffentlichungstag der Anmeldung: **02.10.2019**
(21) Anmeldenummer: 18164127.5
(22) Anmeldetag: 27.03.2018
(51) Int. Cl.: H02K 1/20, H02K 3/48, H02K 9/04, H02K 7/18

(54) **STATORSEGMENT**

(71) Anmelder: Siemens Aktiengesellschaft, 80333 München (DE)
(72) Erfinder: Brenner, Robin, 94036 Passau (DE); Deutsch, Artur, 94060 Pocking (DE); Schönbauer, Norbert, 94072 Bad Füssing (DE); Weger, Michael, 94149 Kößlarn (DE)

(57) **Zusammenfassung**

Die Erfindung betrifft ein Statorsegment (1) eines Stators (15) einer dynamoelektrischen Maschine (11) mit
- axial hintereinander angeordnete genutete Blechen (8), so dass im Wesentlichen axial verlaufende Nuten (2) gebildet sind,
- in den Nuten (2) angeordnete Spulen (4), wobei in einer Nut (2) eine Spulenseite oder zwei Spulenseiten unterschiedlicher Spulen (4) angeordnet sind,
- wobei die Bleche (8) an ihren nutparallelen äußeren Begrenzungsseiten zumindest eine offene Nut (2) aufweist,
- wobei die Spulenseiten in den offenen Nuten (13) durch amagnetische Befestigungsmittel an dem Statorsegment (1) fixiert sind.

## Beschreibung

Die Erfindung betrifft ein Statorsegment, einen Stator und einen Generator, insbesondere einer Windkraftanlage.

Aus der DE 10 2005 029 895 A1 ist ein Direktantrieb für Großantriebe bekannt, der aus mehreren Segmenten aufgebaut ist, die pro Segment eine abgeschlossene Wicklungsanordnung aufweisen.

Aus der EP 0 718 955 A2 ist ein Stator einer hochpoligen mehrphasigen elektrischen Maschine bekannt, wobei der Stator mehrere Segmente unterteilt ist und sich auf jedem Segment eine mehrphasige Wicklung befindet.

Bei segmentierten elektrischen Maschinen, insbesondere Motoren oder Generatoren im höheren Leistungsbereich über 1MW besteht die Möglichkeit das Eisenpaket des Stators so aufzuteilen, dass an den nutparallelen Begrenzungsseiten halbe Nuten vorhanden sind. Erst durch die Montage der einzelnen Segmente wird eine durchgängige Nut und damit eine Wicklung erzeugt. Dies wird beispielsweise bei großen Zahnspulenwicklungen umgesetzt. Problematisch ist dabei die Fixierung der außenliegenden Spulenschenkeln in den halben Nuten insbesondere während des Fertigungsprozesses und Montageprozesses, um während und nach der Imprägnierung den Spulenschenkel an seiner Position zu fixieren.

Ausgehend davon liegt der Erfindung die Aufgabe zugrunde bei dementsprechend gestalteten Statorsegmenten Zahnspulen vorzusehen, die positionsgenau während des Fertigungs- und Montageprozesses fixierbar sind.

Die Lösung der gestellten Aufgabe gelingt durch ein Statorsegment eines Stators einer dynamoelektrischen Maschine mit
- axial hintereinander angeordnete genutete Blechen, so dass im Wesentlichen axial verlaufende Nuten gebildet sind,
- in den Nuten angeordnete Spulen, wobei in einer Nut eine Spulenseite oder zwei Spulenseiten unterschiedlicher Spulen angeordnet sind,
- wobei die Bleche an ihren nutparallelen äußeren Begrenzungsseiten zumindest eine offene Nut aufweist,
- wobei die Spulenseiten in den offenen Nuten durch amagnetische Befestigungsmittel an dem Statorsegment fixiert sind.

Die Lösung der gestellten Aufgabe gelingt auch durch einen Stator mit erfindungsgemäßen Statorsegmenten, wobei die sich einander zugewandten offenen Nuten über Befestigungsmittel an den Jochrücken der Statorsegmente aneinander befestigt sind.

Die Lösung der gestellten Aufgabe gelingt auch durch eine dynamoelektrische Maschine, insbesondere einen Generator einer Windkraftanlage, mit einem erfindungsgemäßen Stator wobei ein Kühlsystem, insbesondere ein Lüfter vorgesehen ist, durch das in die vorhandenen Spalte zwischen den Teilblechpaketen Kühlluft förderbar ist.

Erfindungsgemäß erfolgt die Fixierung des außenliegenden Spulenschenkels am Ende des Statorsegments durch nicht-magnetische Befestigungsmittel. Durch diese nicht-magnetische Befestigungsmittel werden Aufheizungen durch Wirbelströme im Betrieb der dynamoelektrischen Maschine, also z.B. des Windkraftgenerators vermieden. Des Weiteren wird durch die Fixierung der außenliegenden Spulenschenkel, insbesondere während des Fertigungsprozesses, hier vor allem des Imprägnierungsprozesses, aber auch während des Montageprozesses gewährleistet, dass sich der Spulenschenkel nicht von dem, eine offene Nut bildenden Zahn entfernt und somit die Montage oder weitere Fertigungsschritte beeinträchtigt.

In einer Ausführung werden die amagnetischen Befestigungsmittel, insbesondere durch nicht-magnetische Kabelbinder, Schnüre oder Bänder realisiert, was eine im Fertigungsprozess schnelle und unproblematische Fixierung durch kostengünstige Standardteile gewährleistet. Außerdem ist es vorteilhaft, dass diese nicht-magnetischen Befestigungsmittel, insbesondere Kabelbinder eine dauerhaft starke Fixierung der Spulenschenkel an den außenliegenden Zähnen gewährleisten, was insbesondere auch für längere Lagerzeiten derartiger Segmenten von Vorteil ist.

Zwischen Teilblechpaketen des Blechpakets des Statorsegments sind Abstandshalter vorgesehen, die zum einen die Teilblechpakete voneinander beabstanden, radiale Kühlkanäle innerhalb des Blechpakets des Statorsegments und damit des Stators bilden, als auch als Haltevorrichtung für die amagnetischen Befestigungsmittel zur Fixierung der Spulenschenkel an der Nutseitenwand dienen.

Die Abstandshalter sind in ihrer radialen Ausdehnung maximal so hoch wie der Jochrücken und die radiale Zahnhöhe zusammen. Im Normalfall werden die Abstandshalter in den Bereich des Jochrückens ragen und auch nicht die maximale Zahnhöhe einnehmen.

Die Erfindung sowie weitere vorteilhafte Ausgestaltungen der Erfindung werden anhand prinzipiell dargestellter Ausführungsbeispiele näher erläutert. Darin zeigt:
- FIG 1: ein Statorsegment,
- FIG 2: einen Teilausschnitt eines Statorsegments,
- FIG 3: einen Teilausschnitt eines Statorsegments mit Zahnspule,
- FIG 4: eine perspektivische Darstellung eines Teilsegments,
- FIG 5: eine perspektivische Darstellung eines Statorsegments,
- FIG 6: einen Teilausschnitt eines Statorsegments mit Zahnspule,
- FIG 7: prinzipiell dargestellte Windkraftanlage.

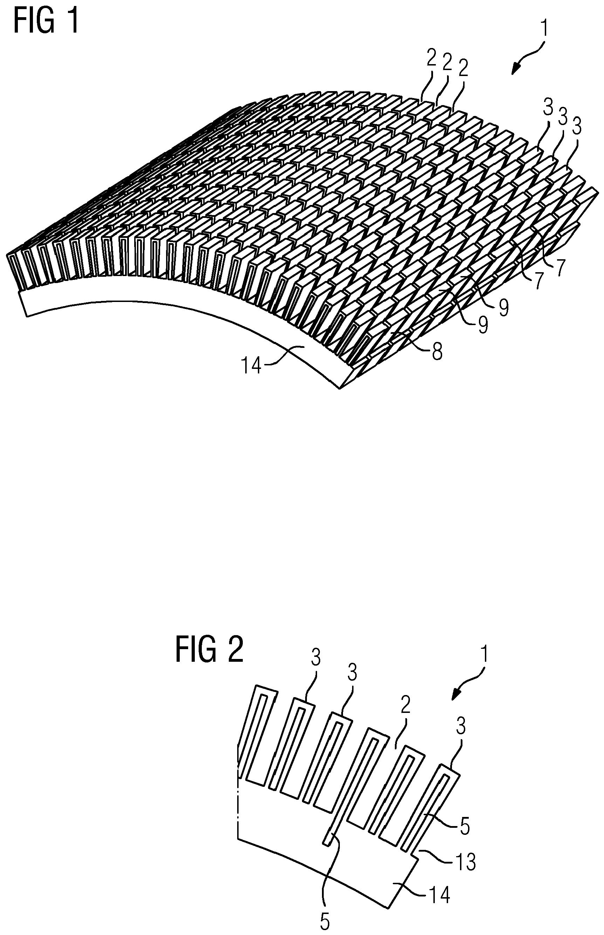

FIG 1 zeigt ein Statorsegment 1 einer dynamoelektrischen Maschine 11, insbesondere eines Generators mit einem Außenläufer, was darin ersichtlich ist, dass die Nuten 2 dieses Statorsegments 1 stachelförmig radial nach außen stehen und das Statorsegment 1 konvex ausgebildet ist.

Das Statorsegment 1 ist in diesem Fall in axialer Richtung aus einzelnen Teilblechpaketen 9 aufgebaut, die durch Abstandshalter 5 voneinander beabstandet sind. Jedes Teilblechpaket 9 weist eine vorgegebene Anzahl von Blechen 8 auf. Diese Paketierung des Statorsegments 1 erleichtert im Einsatzfall des Statorsegments 1 bzw. des eines zusammengesetzten Stators 15 in einer Windkraftanlage 12 eines Generators eine radiale Kühlung des Stators 15.

In Nuten 2 des Statorsegments 1 sind Formspulen, insbesondere Zahnspulen 4 eingesetzt, die jeweils einen Zahn 3 oder mehrere Zähne umfassen.

FIG 2 zeigt eine Detailansicht eines Randbezirks eines Statorsegments 1 mit seinen radial nach außen weisenden Zähnen 3, den Nuten 2 und den angedeuteten Abstandshaltern 5 zwischen den Teilblechpaketen 9. Die Abstandshalter 5 sind in dieser Darstellung in ihrer Breite wesentlich geringer ausgeführt als die Breite eines Zahnes 3. Diese Ausgestaltung bildet, in radialer Richtung betrachtet, Kühlkanäle des Statorsegments 1 mit vergleichsweise großem Querschnitt. Der Abstandshalter 5 erstreckt sich in radialer Richtung bis zum Jochrücken 14 oder aus mechanischen Gründen bis in den Jochrücken 14 des Statorsegments 1.

Die Abstandshalter 5 sind in ihrer radialen Ausdehnung maximal so hoch wie der Jochrücken 14 und die radiale Zahnhöhe zusammen. Im Normalfall werden die Abstandshalter 5 in den Bereich des Jochrückens 14 ragen und auch nicht die maximale Zahnhöhe einnehmen, wie dies beispielhaft an einem Zahn 3 der FIG 2 gezeigt ist.

An dem äußeren Rand des Statorsegments 1 befindet sich somit nur ein Teil einer Nut 2, die als offene Nut 13 bezeichnet wird, in die ein Spulenschenkel 10 einer Zahnspule 4 oder einer anderen Formspule positioniert ist. Eine Nut 2 setzt sich aus Nutseitenwänden und einem Nutgrund zusammen. Als offene Nut 13 wird demnach eine Nut bezeichnet, die nur eine Nutseitenwand und zumindest einen Teil des Nutgrundes aufweist.

Die Nuten 2, 13 sind dabei im Wesentlichen parallel zu einer Achse 16 eines Stators 15 ausgerichtet.

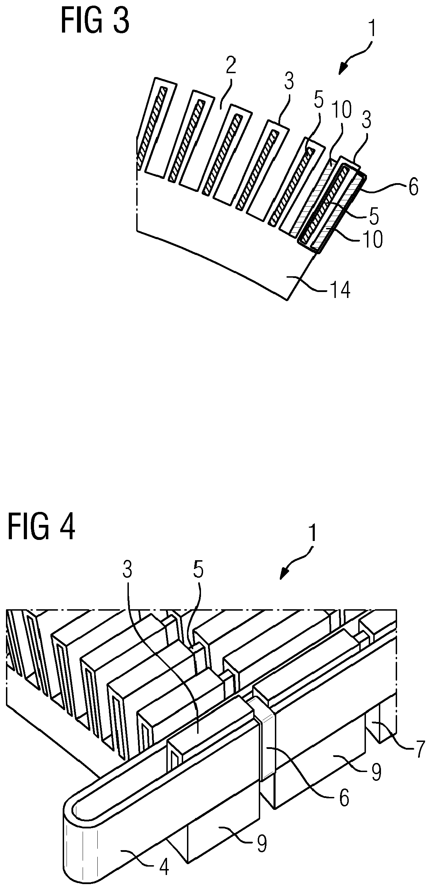

Um nunmehr eine Positioniergenauigkeit und Fixierung dieses Spulenschenkels 10 einer Formspule oder Zahnspule 4 zu erhalten, wird, wie in FIG 3 dargestellt, an den Abstandshaltern 5, die sich in der Lücke 7, also dem axialen Abstand zwischen den Teilblechpakete 9 erstrecken, ein amagnetischer Kabelbinder 6 vorgesehen. Der amagnetische Kabelbinder 6 wird um den in der offenen Nut 13 befindlichen außenliegenden Spulenschenkel 10 einer Zahnspule 4 gelegt. Damit wird der außenliegende Spulenschenkel 10 mittels des amagnetischen Kabelbinders 6 am Abstandshalter 5 fixiert, der wiederum zwischen die Teilblechpakete 9 eingekeilt und dort fixiert ist. Damit erleichtert sich auch im Fertigungsprozess die Imprägnierung, da ein "sich bewegbarer außenliegenden Spulenschenkels 10" vermieden wird.

In einer perspektivischen Darstellung dieses Außenbereichs gemäß FIG 4 wird die Positionierung des amagnetischen Kabelbinders 6 in einer radialen Lücke 7 zwischen zwei Teilblechpaketen 9 am Abstandshalter 5 gezeigt. Damit ist der außenliegende Spulenschenkel 10 an dem außenliegenden Zahn fest fixiert. Dieser Zahn bildet mit einer Seite die Nutseitenwand der offenen Nut 13. Der amagnetische Kabelbinder 6 zieht somit den außenliegenden Spulenschenkel 10 an die Nutseitenwand der offenen Nut 13.

Aufgrund zumindest einer Ausnehmung im Abstandhalter 5 und/oder in der Spule 4 im axialen Bereich dieses Abstandhalters 5 kann der amagnetische Kabelbinder 6 auch nur Abschnitte des Abstandhalters 5 und der Spule 4 umgreifen, ohne die angestrebte Fixierung der Spule 4 an den Zahn zu beeinträchtigen. Dabei kann der der Kabelbinder 6 durch diese Ausnehmungen gefädelt werden. Dies verkleinert den Umschlingungsumfang, sodass auch kürzere Kabelbinder 6 eingesetzt werden können.

Ein derartiger amagnetischer Kabelbinder 6 ist bei den beschriebenen Statorsegmenten 1 an einem oder mehreren Abstandshaltern 5 zur Fixierung des Spulenschenkels 10 vorgesehen. Auf die axiale Länge eines Statorsegments 1 betrachtet befinden sich beispielsweise nur an einem oder an jedem Abstandshalter 5 oder jeden zweiten Abstandshalter 5 die Kabelbinder 6.

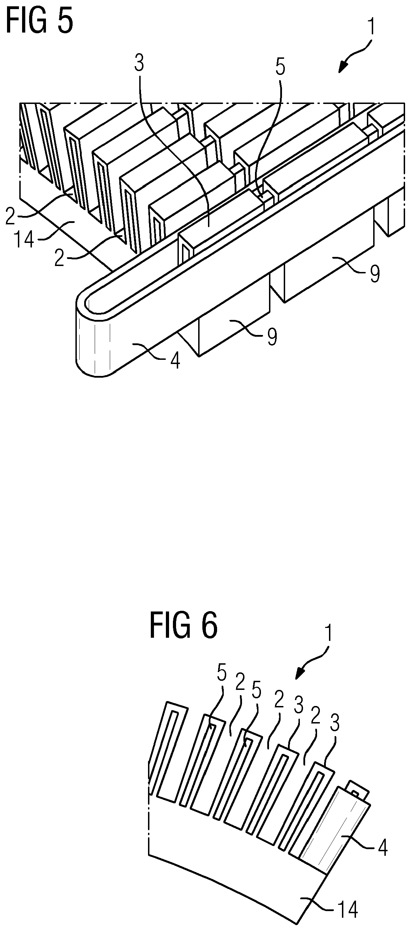

In FIG 5 ist in einer anderen Darstellung dieser Anordnung gemäß FIG 4 gezeigt, wie die Positionierung der Spule 4 auf dem letzten Zahn des Statorsegments 1 erfolgt. Der Abstandshalter 5 zwischen den Teilblechpaketen 9 ist dabei noch nicht mit einem amagnetischen Kabelbinder 6 versehen. Damit würde sich der außenliegende Spulenschenkel 10 im weiteren Fertigungsprozess oder gar bei der Montage der Statorsegmente 1 zu einem Stator 15 gegebenenfalls vom Zahn 3 wegbewegen.

FIG 6 zeigt einen Querschnitt der oben genannten Darstellung die Anordnung der Spule 4 auf dem letzten, also äußeren Zahn 3, wobei das Wicklungssystem dieses Statorsegments 1 dadurch so aufgebaut werden kann, dass um jeden Zahn 3 eine Zahnspule 4 vorgesehen wird. Das bedeutet, dass in jeder Nut 2 unterschiedliche Spulenseiten unterschiedlicher Spulen 4 vorhanden sind.

Jeder in einer offenen Nut 13 befindliche Spulenschenkel wird durch einen oder mehrere vorzugsweise axial verteilt angeordnete Kabelbinder 6 am äußeren Zahn bzw. an der Nutseitenwand der offenen Nut 13 im Bereich der Abstandshalter 5 fixiert.

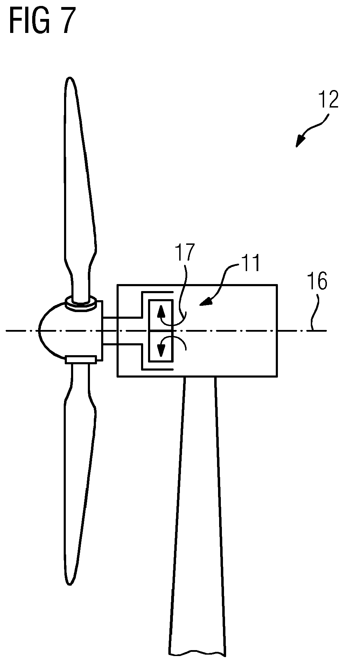

Eine derartige Anordnung von Statorsegmenten 1 wird bei Statoren 15 bevorzugt, die für große Leistungen und/oder Direktantriebe, insbesondere bei Windkraftanlagen 12 gemäß FIG 7 oder Rohrmühlen vorgesehen sind. Ein Rotor dreht dabei um eine Achse 16, wobei die Nuten 2 des Statorsegments 1 und des Stators 15 im Wesentlichen achsparallel ausgerichtet sind.

Dabei kann ein Lüfter einen Kühlstrom 17 erzeugen, der zumindest den Generator und/oder Umrichterkomponenten, insbesondere den Stator 15 über die durch die Abstandshalter 5 generierten radialen Kühlkanäle im Statorsegment 1 kühlt.

## Patentansprüche

1. Statorsegment (1) eines Stators (15) einer dynamoelektrischen Maschine (11) mit
- axial hintereinander angeordnete genutete Blechen (8), so dass im Wesentlichen axial verlaufende Nuten (2) gebildet sind,
- in den Nuten (2) angeordnete Spulen (4), wobei in einer Nut (2) eine Spulenseite oder zwei Spulenseiten unterschiedlicher Spulen (4) angeordnet sind,
- wobei die Bleche (8) an ihren nutparallelen äußeren Begrenzungsseiten zumindest eine offene Nut (2) aufweist,
- wobei die Spulenseiten in den offenen Nuten (13) durch amagnetische Befestigungsmittel an dem Statorsegment (1) fixiert sind.

2. Statorsegment (1) nach Anspruch 1, **dadurch gekennzeichnet, dass** nach einer vorgebbaren Anzahl von Blechen (8) in axialer Richtung Abstandshalter (5) vorgesehen sind, so dass in axialer Richtung betrachtet zwei oder mehrere Teilblechpakete (9) des Statorsegments (1) vorhanden sind.

3. Statorsegment (1) nach Anspruch 1 oder 2, **dadurch gekennzeichnet , dass** die amagnetischen Befestigungsmittel als amagnetische Kabelbinder (6) ausgeführt sind.

4. Statorsegment (1) nach Anspruch 3, **dadurch gekennzeichnet, dass** die amagnetischen Kabelbinder (6) im Bereich der axial voneinander beabstandeten Bleche (8) angeordnet sind, wobei der Kabelbinder (6) zumindest abschnittsweise um den jeweiligen Abstandshalter (5) geführt ist.

5. Stator (15) mit Statorsegmenten (1) nach einem der vorhergehenden Ansprüche, **dadurch gekennzeichnet, dass** die sich einander zugewandten offenen Nuten (13) zweier Statorsegmente (1) nur mit einem Spulenschenkel eines Statorsegments (1) oder zwei Spulenschenkeln (10) unterschiedlicher aber benachbarter Statorsegmente (1) versehen sind.

6. Dynamoelektrische Maschine (11), insbesondere Generator einer Windkraftanlage, mit einem Stator (15) nach Anspruch 5, **dadurch gekennzeichnet, dass** ein Kühlsystem, insbesondere Lüfter vorgesehen ist, durch das in die vorhandenen Spalte zwischen den Teilblechpaketen (9) Kühlluft förderbar ist.
